# EUROPEAN PATENT SPECIFICATION

(11) **EP 4 003 663 B1**
(45) Date of publication and mention of the grant of the patent: **10.04.2024**
(21) Application number: 20776225.3
(22) Date of filing: 07.08.2020
(51) Int. Cl.: B25J 9/10, B25J 13/08, B25J 15/00, B25J 19/06

(54) **A TENDON TENSION SENSING APPARATUS AND A CLUTCH MECHANISM FOR A MECHANICAL EFFECTOR DEVICE**
SEHNENSPANNUNGSMESSVORRICHTUNG UND KUPPLUNGSMECHANISMUS FÜR EINE MECHANISCHE EFFEKTORVORRICHTUNG
APPAREIL DE DÉTECTION DE TENSION DE TENDON ET MÉCANISME D'EMBRAYAGE POUR DISPOSITIF EFFECTEUR MÉCANIQUE

(30) Priority: 09.08.2019 GB 201911453
(43) Date of publication of application: 01.06.2022
(73) Proprietor: The Shadow Robot Company Limited, London, Greater London NW5 1LP (GB)
(72) Inventor: GREENWALD, Daniel, London N17 6SY (GB); ELIAS, Hugo, London E5 9RN (GB); CROSS, Paul, London SG6 2AR (GB); WARBURTON, Robert, London BR6 9QP (GB); GODDEN, Matthew, London U2 0HY (GB)
(74) Representative: Basck Limited
(86) International application number: PCT/IB2020/057469
(87) International publication number: WO 2021/028803

(56) References cited:
- CN-A- 108 942 980
- GB-A- 2 496 335
- JP-A- H04 190 691
- JP-A- 2004 132 418
- US-A1- 2006 145 495
- US-A1- 2018 272 541
- US-B1- 6 668 678

## Description

### FIELD

The present invention relates to a clutch mechanism for a mechanical effector device.

### BACKGROUND

It is desirable to use robotic devices in many industries, and there is a wide range of known devices that closely mirror or mimic the functionality of the human hand, as well as robot hands that are inspired by the human hand, but which have differing numbers of digits and different functionality. An example of a known type of robot hand is described and shown in US7,168,748. A robot hand with the features of the preamble of claim 1 is disclosed in CN 108 942 980 A.

The human hand is capable of numerous movements over a wide range and over different axes. In addition, the human hand is capable of gripping objects over a wide range of different sizes, using a wide range of forces from very delicate to very strong. The vast range of movements and functionality are difficult to accurately reproduce, since each additional axis or range of movement usually requires the addition of a further joint or joint assembly within the structure of the robotic hand. Each separate joint or joint assembly requires it's own power supply and control mechanism, and these need to be connected to the joint and through the overall structure, and correctly positioned, so as to avoid interference with any intervening or neighbouring elements. This usually results in a highly complex arrangements of wires and cables, both for power delivery and sensing, and also for transmission of movement forces (tendon cables or wires). The number of these wires and cables, plus associated elements, increases for every additional joint/joint assembly. This results in robotic hands being complex to produce and usually also bulky, which can in turn reduce the overall dexterity of the robotic hand.

In order to get overall motion or force in the correct or desired direction, it is necessary to provide a precise level of force to multiple tendons within the hand, so that movement of a number of individual joints is resolved into the correct overall direction and force. It is therefore necessary to accurately measure the force in each individual tendon, so that the overall force (and therefore movement) is resolved correctly. One known way of measuring the tension in a tendon is to pass this through a relatively sharp bend or corner of around 90 degrees. This allows force to be measured through a relatively discrete point, which allows accurate measurement. However, corners create wear points, and as the tendons pass backwards and forwards over the corner in use, they quickly become worn and can fail more rapidly (in fewer cycles) than is desirable.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

### SUMMARY

It is an object of the present invention to provide a clutch mechanism for a mechanical effector device which goes some way to overcoming the abovementioned disadvantages or which at least provides the public or industry with a useful choice.

The term "comprising" as used in this specification and indicative independent claims means "consisting at least in part of". When interpreting each statement in this specification and indicative independent claims that includes the term "comprising", features other than that or those prefaced by the term may also be present. Related terms such as "comprise" and "comprises" are to be interpreted in the same manner. As used herein the term "and/or" means "and" or "or", or both.

As used herein "(s)" following a noun means the plural and/or singular forms of the noun.

Accordingly, in a first aspect the present invention may broadly be said to consist in a **clutch mechanism for a mechanical effector device,** comprising: a reel configured for winding and unwinding a tendon around the reel; a base configured to connect to and rotate with a motor for rotation of the base around an axis; the reel and base further configured for alignment with and rotation around a common axis of rotation, the inner ends of the reel and base mutually castellated and interlocking so that the base and reel rotate together; the castellations configured to ride up and over one another to allow independent rotation of the reel and base if an un-resolvable rotation force is encountered.

In an embodiment, the clutch mechanism further comprises a spring, the spring configured to provide a reaction force against the reel is response to movement of the reel along the axis of rotation away from the base.

In an embodiment, the castellations have sloped sides, the dimensions of the reel and base, the angles of the sloped sides, and the strength of the spring adjusted to provide a desired maximum disengagement force between the reel and base.

In an embodiment, there are three castellations on each of the reel and base.

In an embodiment, each of the castellations on one of the reel or the base further comprises a ball bearing located within the castellation, the outwardly-facing part of the bearings fitting within corresponding indentations formed in the other of the reel or base.

### BRIEF DESCRIPTION OF THE FIGURES

Further aspects of the invention will become apparent from the following description which is given by way of example only and with reference to the accompanying drawings which show an embodiment of the device by way of example, and in which:
**Figure 1** shows a perspective view of a robot hand, showing detail of the motor and cable arrangement within the hand and main body, the robot hand containing a sub-assembly that includes a clutch and a tendon tension sensor assembly.
**Figure 2** shows a perspective view from above and to one side of the sub-assembly of the robot hand.
**Figure 3** shows a perspective view from above and to one side of an embodiment of the clutch assembly, the clutch assembly having a base and reel with end faces connected via interlocked castellations, the reel biased towards the base via a spring at the opposite end of the reel from the base.
**Figure 4** shows a side view of the clutch assembly of figure 3.
**Figure 5** shows a cutaway view of the clutch assembly from the same angle as figure 4
**Figure 6** shows a perspective view from the side and above of the clutch assembly of figures 3 to 5, with a framework around the clutch assembly for retaining the clutch elements, and securing the clutch assembly to a robot arm in use.
**Figure 7** shows a side view of the clutch assembly and frame of figure 6.
**Figure 8** shows a close-up side view of the clutch assembly and frame of figures 6 and 7.
**Figure 9** shows a perspective view from the side of the reel and base of the clutch assembly, showing detail of the castellations on the mutually connecting end faces.
**Figure 10** shows a perspective view of an alternative embodiment of reel and base of an alternative form of clutch assembly, showing detail of the castellations on the mutually connecting end faces.
**Figures 11a -11c** show perspective views of the detail of the tendon tension sensor assembly, the tendon tension sensor assembly comprising three pulleys over which a tendon passes in use, and a load cell body and strain gauge which are used to measure tension in the tendon.

### DETAILED DESCRIPTION

Embodiments of the invention, and variations thereof, and technical background not necessarily part of the claimed invention, will now be described in detail with reference to the figures.

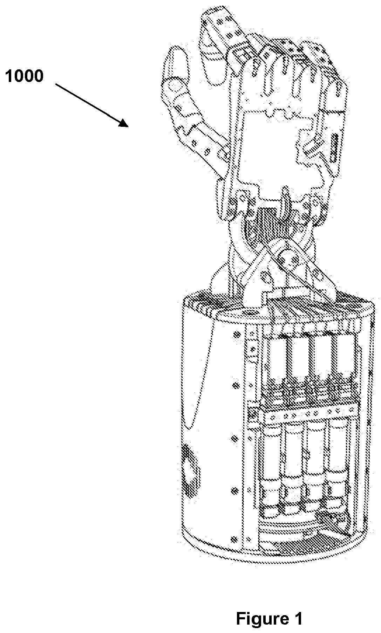

A robot hand 1000 is shown in figure 1. As can be seen, there is a high density of wires and cables within the body or 'base' of the hand 1000, and within the hand 1000 itself. As outlined in the background section, the cables transmit and receive information and commands, and the tendon cables transmit force through the joints and joint assemblies within the hand 1000, in order to move the hand and the separate digits. Each tendon will run generally between a motor at one end (an inner end, within the 'forearm'), through and over various pulleys and other items that change the direction in which it runs (in order for it to fit and operate within the overall space) to an outer end point at or close to the end of an actuator - in this embodiment a fingertip. The tendons of robot arms/hands or actuators operate between maximum and minimum tensions - the tendon always has a minimum tension applied, so as to keep it taut within it's path of travel and prevent it becoming loose enough to work it's way out of the path. For clarity, those cables used for movement and transmission of force will be referred to simply as tendons throughout the text. 'Wires' will be used to signify elements that transmit power or data.

The amount of force transmitted depends on the tension or 'pull' on/through the tendon, which is in turn transmitted to the digits of the hand, these then exerting a gripping force on a grasped object. It is important that this tension can be accurately and repeatably measured, so that the amount of force exerted on a grasped object can be accurately calculated. It is also important that the tendon should have as long a lifespan in use as possible. That is, that is should potentially be capable of hundred of thousands or millions of uses, or separate cycles of tension and release.

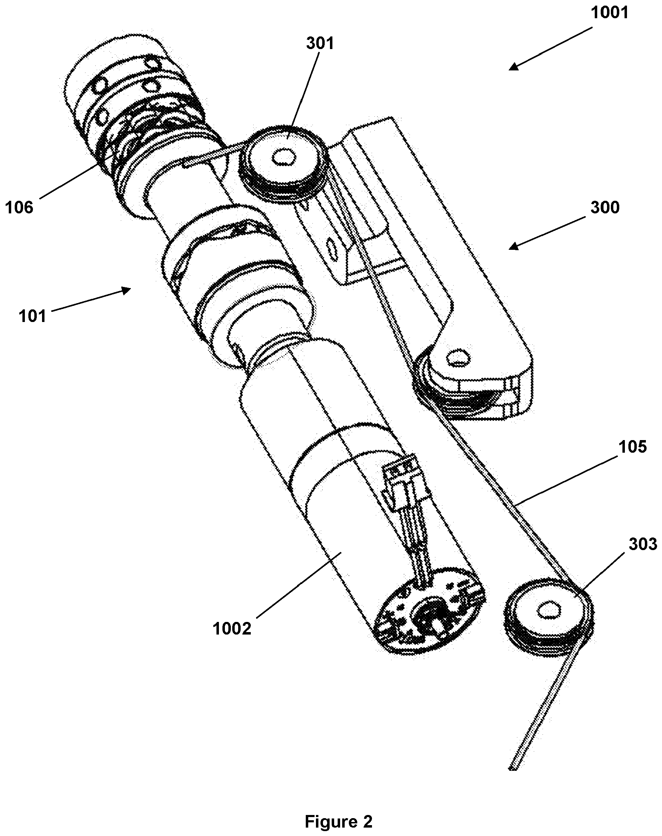

A sub-assembly 1001 of a robot hand is shown in figure 2. The sub-assembly 1001 comprises a motor 1002 that is connected and which in use turns a reel 102 so as to wind a tendon 105 around the reel in use. In the preferred form, the reel 102 forms part of a clutch 101, that forms part of the sub-assembly 1001. The sub-assembly 1001 also includes a tendon tension sensor assembly 300.

### CLUTCH

As noted above, in order to get overall motion or force from the hand in the correct or desired direction, it is necessary to provide a precise level of force to multiple tendons within the hand, so that movement of a number of individual joints is resolved into the correct overall direction and force. It is possible that in use these forces do not fully resolve in the desired manner, or that there is in certain circumstances a miscalculation of the distances and forces required, particularly when the hand is operating within changing surroundings, with semi-static but moveable external elements. This can result in the hand or elements of the hand impacting and being forced against a surface or other element, with feedback being insufficient and/or not provided rapidly enough for immediate reversal or disengagement. This can cause excessive force to be exerted on the tendon or tendons, as the motor attempts to resolve the initial commands by continuing to apply force or by applying increasing force, but with the hand elements physically blocked from resolving these.

The present invention comprises a clutch or clutches within an effector such as a robot hand, so that if this situation arises, the tendons are not subject to a force sufficient to cause damage or destruction (e.g. snapping of the tendon).

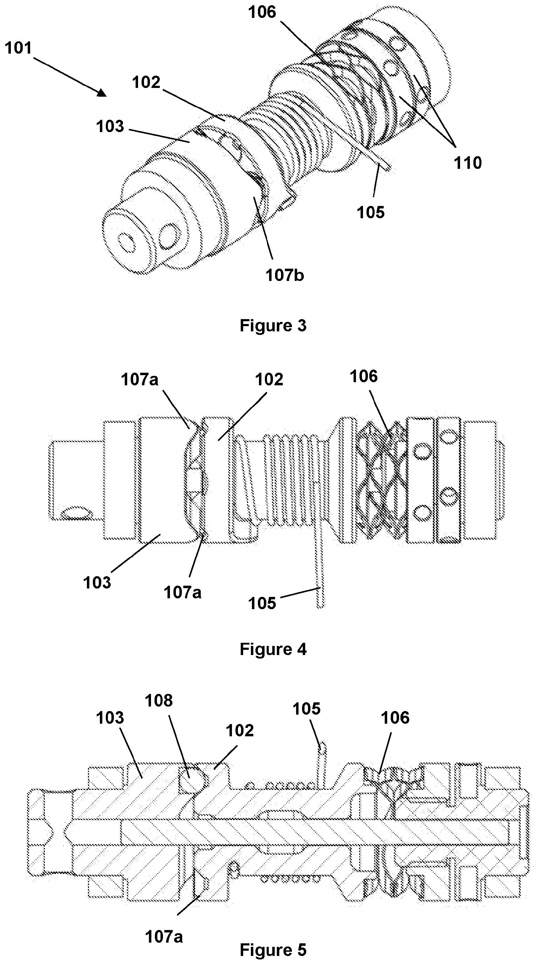

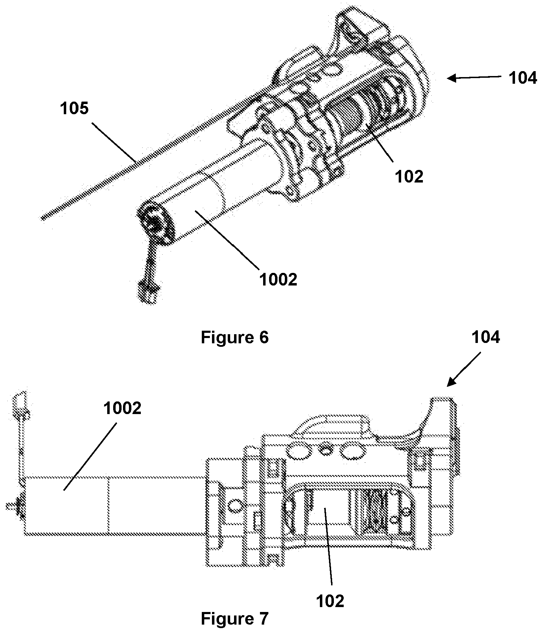

As shown in figures 3 to 9, in an embodiment, the clutch 101 comprises a reel 102 and base 103, held within a framework 104 (which is in turn connected to the forearm or similar) so that the outer end of the reel 102 is held in position towards one end of the framework 104, the inner end of the reel 102 connects to an inner end of the base 103, and the outer end of the base 103 connects to the framework 104 at the opposite end. The reel 102 and base 103 have a common axis of rotation, and can rotate both clockwise and anticlockwise (viewed from a point at one end of the reel 102 parallel to the axis of rotation of the reel 102). In use, the tendon 105 passes over the reel 102 - that is, is wrapped 3-4 times around the reel - and the reel 102 rotates in both directions as the tendon 105 moves backwards and forwards under tension in use. The base 103 is connected to the framework 104 via a coil spring 106, so that it can move linearly along the axis of rotation, moving away from the reel 102 and toward the frame 104 to put the coil spring 106 in increased tension. In variations, the coil spring could be replaced by any suitable form of spring, such as a wave spring.

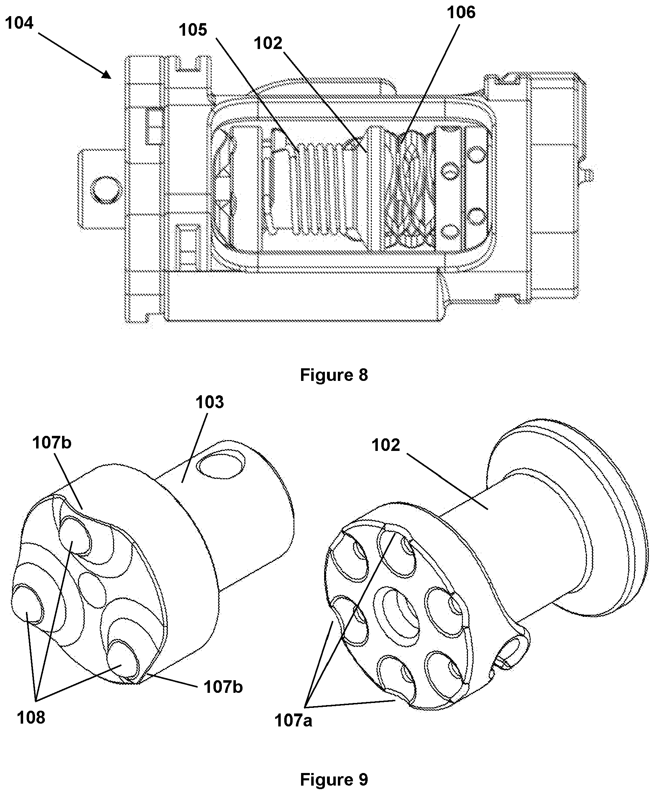

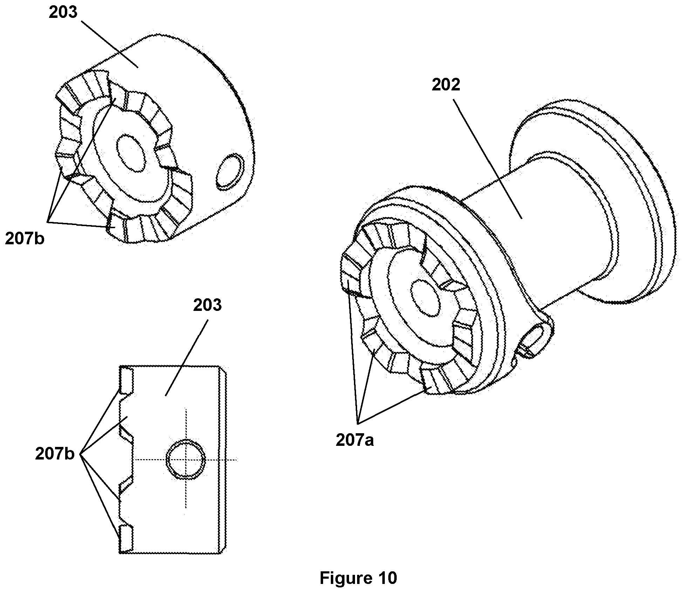

The common/connected ends of the reel and base are configured as a clutch. The connecting ends of the base 103 and the reel 102 are mutually castellated, the castellations 107a, 107b on the reel 102 and base 103 respectively having sloped or angled sides, as shown in the two alternative embodiments of figures 9 and 10. In the embodiment of figure 9, there are three castellations 107 on each of the reel and base 102, 103. Steel ball bearings 108 are fixed within bearing slots in the reel, in the castellated portion. That is, three steel bearings 108 are located within a circular castle (viewed end-on) that forms the inner end of the reel 102. The outwardly-facing part of the bearings 108 fits within corresponding indentations formed in the base element 103. Ball-bearings are inexpensive and highly polished and provide an excellent element for this type of use.

In normal use, the castellations 107a, 107b fully interlock so that as the tendon 105 moves backwards and forwards, the base 103 and reel 102 both rotate together. However, if there is an issue, and increasing but un-resolvable force is being applied to the tendon 105 (for example, if that part of the hand 1000 to which it is connected is jammed against a surface and is attempting to move through the surface to resolve it's position programming), then the clutch 101 will 'slip' in order that damage to the tendon 105 and potentially other elements is prevented. The reel 102 and base 103 will move relative to one another so that the castellations 107a, 107b start to ride up and along and over each other. The base 103 will be forced back against the coil spring 106.

If the force is strong enough to overcome the inherent reaction force provided by the castellations 107 and the spring 106, then the castellations 107 will ride up and over each other, allowing the reel 102 to rotate and the tendon 105 to move, to release the force on the tendon 105.

The size of the elements (e.g. the reel and base 102, 103), the angles of the castellations 107, and strength of the spring 106 can all be calculated to provide the desired release force or trigger force - that is, the maximum force at which the clutch 101 will disengage.

That is, the tendon 105 transmits a force on to the reel 102 which converts to a torque of the reel 102 when this torque is transmitted, via the castellations, from the reel 102 to the base 103, and then in turn to the motor. In a similar fashion, the motor generates a torque that is transmitted to the base 103 and in turn to the reel 102 which generates a tension force in the tendon.

If, during rotation in either direction the torque exceeds the torque that the castellations can transmit, they will begin to separate. The maximum level of torque that can be transmitted before these two elements begin to separate is governed by the force of the spring 106. The spring tension can be adjusted by increasing or decreasing the gap in which the spring 106 sits, pre-compressing the spring 106 to a greater or lesser extent. This is achieved by rotating the end elements 110, which are threaded to facilitate this adjustment. In the preferred form, once this adjustment is complete the elements 110 are then locked in the required position with thread locking adhesive. However, other means could be employed to provide this adjustment. By spring selection and adjusting the pretension of the spring the clutch can be set to disengage at a specific torque or tendon tension, for example a tendon tension of approximately 50 newtons is common in the current embodiment of the invention.

The use of a clutch allows the use of a powerful motor without having to change other elements to compensate (e.g. stronger material for the tendons).

The use of the castellations also provides a 'pre-slip signal'. As the base and reel start to ride up, this can be detected, and used to provide feedback to the controller.

Additionally, this partial slip condition serves to soften transient force spikes. When high peak load is caused by for example high motor acceleration some of that energy is absorbed into the spring reducing the wear on the tendon from unnecessary high peak loads. Thus, even without completely disengaging the clutch can absorb some peak loads reducing wear on either the tendon or the motor gear depending in which direction the peak impulse load is traveling.

It should be noted that the use of ball bearings in the clutch of the present invention, and as described above for the preferred embodiment, offers an advantage over simply having castellated elements, as this allows greater precision, and therefore greater precision in the point of release/force required for release. A castellated element without ball bearings tends to require greater precision in manufacturing machining to achieve a similar result, and this can drive up the overall cost required.

The reel material is chosen to provide the correct bearing function both for the castellations to transmit torque, and also where the reel contacts the rod (not shown) that forms the axis of rotation. In use, the reel must slide along and around this rod in normal use, and as the reel disengages from the base. This sliding action needs to be reasonably low friction so as not to overly increase the torque needed to disengage the clutch.

In the preferred embodiment, the current reel diameter where the tendon wraps onto the reel is 10mm which gives an effective radius (within which tendon tension is acting) of 5.4mm, assuming a tendon with a diameter of 0.8mm. For a given tendon tension of x Newtons this would become x multiplied by 5.4 newton millimetres (Nmm) thus a tendon tension of 50N would become a torque of 270Nmm and similarly a motor toque applied through the clutch of 270Nmm would become a tendon tension of 50N. (assuming no frictional or other losses).

However, in certain embodiments, castellated elements are preferable, and an alternative arrangement is shown in figure 10, with a reel 202, base 203, and castellations 207a, 207b.

### TENDON TENSION SENSOR

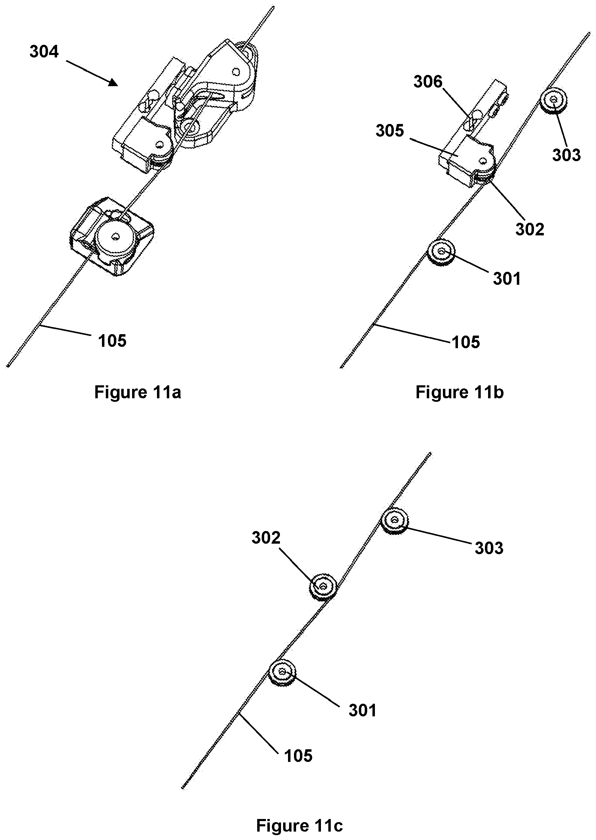

An embodiment of the tendon tension sensor assembly 300 is shown in figures 11a, 11b, and 11c.

As shown in figures 11a, 11b, and 11c, in an embodiment, a tendon 105 that forms part of a robot hand assembly, and in which force is to be measured, is routed over three pulley wheels 301, 302 and 303, the pulley wheels arranged generally linearly, with the centre pulley 302 offset slightly from the pulleys 301, 303 at each end. The rotational axes of all three pulleys are arranged in parallel to one another. When viewed in a direction along the rotational axes of the pulleys, the tendon 105 forms the two shorter sides of a triangle with an apex that runs over the centre pulley 302, with the 'base' of the triangle formed by a line that runs tangentially between the outer pulley wheels 301, 303.

The dimensions of the pulleys, the offset and the distances between the pulleys are chosen to minimise as far as possible the offset or angling of the tendon 105 - to minimise the size of the two smaller angles of the triangle described above (the angles formed between the 'base line' between pulleys 301, 303, and the sides 301-302, and 303-302. Any point where the tendon 105 has to 'turn' a corner or go through an angle creates a potential wear point on the tendon 105 which can lead to failure and/or a reduced life span. A sharper or more acute angle means that the tendon 105 has to 'turn' a sharper corner, and this potentially creates a greater level of wear, an increased chance of failure, and a reduction in the lifespan of the tendon 105. Therefore, the dimensions are chosen to minimise the angles as far as is practical. This reduces the tendon load and therefore reduces tendon wear as it passes over the deflection points and changes it's direction of travel.

In the preferred embodiment, the diameter of the pulley 301, 302, 303 is 10mm. The two outer pulleys 301, 303 are set apart a distance of 90mm, with the central pulley 302 set such that the tendon forms an equilateral triangle between the three pulleys with base angles of 3 degrees. From this geometry the resultant force acting on the middle pulley and thus transmitted to the load cell is the tendon tension multiplied by a factor of 0.1 so a tendon tension of 50N is seen as a force of 5N at the load cell. The angle of deflection can be chosen for the desired multiplication factor, such that this multiplication factor is 2 times the Sin of the angle - that is, 2 * SIN(Angle).

A load cell 304 is arranged behind and connected to the central/offset pulley 302, to measure the deflection of the pulley 302 when the robot hand is in use and a force is applied to the tendon 105. The load cell 304 measures the linear force or movement of the central pulley 302, perpendicular to the base line of the triangle 301-302-303, and uses this to calculate the tension/force in the tendon 105. The load cell 304 in this embodiment comprises a solid aluminium body 305 with a strain gauge 306 applied to/connected to the body. The strain gauge 306 provides displacement data in real-time to the hardware/software controlling the robot hand, so that this can be used to calculate the required power to the motor and therefore the tension/force in the tendon 105, as required.

It has been found that the working envelope of the tendon 105 can be kept well within tolerance by choosing a small or shallow angle or shallow path, while still providing enough sensitivity to allow accurate, fast and responsive measurement of the tension in the tendon 105.

An arrangement as outlined above minimises the change of angle of the tendon 105, and therefore the frictional wear, while still providing an arrangement where bending stresses can be accurately measured (and therefore the tension in the tendon accurately calculated).

## Claims

1. **A clutch mechanism for a mechanical effector device,** comprising:
a tendon 105;
a reel 102 configured for winding and unwinding the tendon 105 around the reel 102, the tendon in use connecting between the reel 102 and an actuator;
a base 103 configured to connect to a motor for rotation of the base 103 around an axis of rotation;
the reel 102 and base 103 further configured for alignment with and rotation around a common axis of rotation, the inner ends of the reel 102 and base 103 mutually castellated and interlocking so that the base 103 and reel 102 rotate together;
**characterised in that**
the castellations 107a, 107b are configured to ride up and over one another to allow independent rotation of the reel 102 and base 103 if an un-resolvable rotation force is encountered.

2. A clutch mechanism for a mechanical effector device as claimed in claim 1 further comprising a spring, the spring configured to provide a reaction force against the reel in response to movement of the reel along the axis of rotation away from the base.

3. A clutch mechanism for a mechanical effector device as claimed in claim 2 wherein the castellations comprise sloped and/or shaped sides, the dimensions of the reel and base, the angles of the sloped and/or shaped sides, and the strength of the spring adjusted to provide a desired maximum disengagement force between the reel and base.

4. A clutch mechanism for a mechanical effector device as claimed in any one of claims 1 to 3 wherein each of the reel and base comprise three castellations.

5. A clutch mechanism for a mechanical effector device as claimed in any one of claims 1 to 4 wherein each of the castellations on one of the reel or the base further comprises a ball bearing located within the castellation, the outwardly-facing part of the bearings fitting within corresponding indentations formed in the other of the reel or base.

## Patentansprüche

1. **Kupplungsmechanismus für eine mechanische Effektorvorrichtung,** umfassend:
ein Spannglied 105;
eine zum Auf- und Abwickeln des Spannglieds 105 um die Haspel 102 konfigurierte Haspel 102, wobei das Spannglied im Gebrauch eine Verbindung zwischen der Haspel 102 und einem Stellglied herstellt;
eine zum Verbinden mit einem Motor konfigurierte Basis 103 zum Drehen der Basis 103 um eine Drehachse;
wobei die Haspel 102 und die Basis 103 ferner zum Ausrichten mit und Drehen um eine gemeinsame Drehachse konfiguriert sind, wobei die inneren Enden der Haspel 102 und der Basis 103 gegenseitig kronenförmig sind und ineinander greifen, sodass sich die Basis 103 und die Haspel 102 gemeinsam drehen;
**dadurch gekennzeichnet, dass**
die Kronen 107a, 107b zum Auf- und Übereinanderfahren konfiguriert sind, um eine unabhängige Drehung der Haspel 102 und der Basis 103 zu ermöglichen, wenn eine nicht auflösbare Drehkraft auftritt.

2. Kupplungsmechanismus für eine mechanische Effektorvorrichtung nach Anspruch 1, ferner umfassend eine Feder, wobei die Feder ausgelegt ist, eine Gegenkraft gegen die Haspel in Reaktion auf die Bewegung der Haspel entlang der Drehachse weg von der Basis bereitzustellen.

3. Kupplungsmechanismus für eine mechanische Effektorvorrichtung nach Anspruch 2, wobei die Kronen geneigte und/oder geformte Seiten aufweisen, wobei die Abmessungen der Haspel und der Basis, die Winkel der geneigten und/oder geformten Seiten und die Stärke der Feder zum Bereitstellen einer gewünschten maximalen Ausrückkraft zwischen der Haspel und der Basis eingestellt sind.

4. Kupplungsmechanismus für eine mechanische Effektorvorrichtung nach einem der Ansprüche 1 bis 3, wobei die Haspel und die Basis jeweils drei Kronen aufweisen.

5. Kupplungsmechanismus für eine mechanische Effektorvorrichtung nach einem der Ansprüche 1 bis 4, wobei jede der Kronen auf einer der Haspel oder der Basis ferner ein innerhalb der Krone angeordnetes Kugellager umfasst, wobei der nach außen weisende Teil der Lager in entsprechende Vertiefungen passt, die in der anderen der Haspel oder der Basis ausgebildet sind.

## Revendications

1. **Mécanisme d'embrayage pour un dispositif d'effecteur mécanique,** comprenant :
un tendon 105 ;
une bobine 102 configurée pour enrouler et dérouler le tendon 105 autour de la bobine 102, le tendon en utilisation se connectant entre la bobine 102 et un actionneur ;
une base 103 configurée pour se raccorder à un moteur pour la rotation de la base 103 autour d'un axe de rotation ;
la bobine 102 et la base 103 étant en outre configurées pour être alignées avec un axe de rotation commun et pour tourner autour de celui-ci, les extrémités intérieures de la bobine 102 et de la base 103 étant mutuellement crénelées et s'emboîtant de sorte que la base 103 et la bobine 102 tournent ensemble ;
**caractérisé en ce que**
les crénelures 107a, 107b sont configurées pour monter et descendre les unes sur les autres pour permettre une rotation indépendante de la bobine 102 et de la base 103 si une force de rotation non résoluble est rencontrée.

2. Mécanisme d'embrayage pour un dispositif d'effecteur mécanique selon la revendication 1, comprenant en outre un ressort, le ressort étant configuré pour conférer une force de réaction contre la bobine en réponse au mouvement de la bobine le long de l'axe de rotation en éloignement de la base.

3. Mécanisme d'embrayage pour un dispositif d'effecteur mécanique selon la revendication 2, dans lequel les crénelures comprennent des côtés inclinés et/ou profilés, les dimensions de la bobine et de la base, les angles des côtés inclinés et/ou profilés, et la résistance du ressort étant ajustés pour conférer une force de dégagement maximale souhaitée entre la bobine et la base.

4. Mécanisme d'embrayage pour un dispositif d'effecteur mécanique selon l'une quelconque des revendications 1 à 3, dans lequel chacune de la bobine et de la base comprend trois crénelures.

5. Mécanisme d'embrayage pour un dispositif d'effecteur mécanique selon l'une quelconque des revendications 1 à 4, dans lequel chacune des crénelures sur l'une parmi la bobine ou la base comprend en outre un roulement à billes situé au sein de la crénelure, la partie tournée vers l'extérieur des roulements s'ajustant au sein d'indentations correspondantes formées dans l'autre parmi la bobine ou la base.
